(19) Europäisches Patentamt
European Patent Office
Office européen des brevets

(11) **EP 4 439 006 A1**

(12) **EUROPEAN PATENT APPLICATION**

(43) Date of publication:
**02.10.2024 Bulletin 2024/40**

(21) Application number: **23164908.8**

(22) Date of filing: **29.03.2023**

(51) International Patent Classification (IPC):
***G01B 11/14*** *(2006.01)* ***G01B 15/00*** *(2006.01)*

(52) Cooperative Patent Classification (CPC):
**G01B 11/14;** G01B 15/00; G01B 2210/50

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Gamesa Renewable Energy A/S**
**7330 Brande (DK)**

(72) Inventors:
• **FUERST-SYLVESTER, Marius**
**27478 Cuxhaven (DE)**

• **SCHNEIDER, Thorsten**
**27432 Bremervörde (DE)**
• **HENRIKSEN, Benjamin**
**7400 Herning (DK)**
• **SOERENSEN, Martin Bach**
**7400 Herning (DK)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **AIR GAP SIZE DETERMINATION**

(57) It is described a method of measuring a size (d) of an air gap(ag) between a rotor surface (107) and a stator surface (110) of an electrical machine (100), in particular permanent magnet machine, the method comprising: performing a measurement based on electromagnetic radiation, in particular using at least one measurement probe installed at the stator and/or the rotor, to obtain air gap size related information to obtain air gap size related information; determining the size (d) of the air gap (ag) based on the air gap size related information.

FIG 1

EP 4 439 006 A1

**Description**

Field of invention

The present invention relates to a method of measuring a size of an air gap between a rotor surface and a stator surface of an electrical machine. Furthermore, the present invention relates to an electrical machine and further relates to a wind turbine comprising the electrical machine.

Art Background

Between a rotor and a stator of an electrical machine, an air gap is present. According to design requirements of the electrical machine, the air gap has to have a particular shape and/or size. In order to ensure a reliable operation of the electrical machine, the air gap of the assembled electrical machine (the air gap size and/or shape) should adhere to the design requirements.

Conventionally, the air gap of an assembled or partly assembled electrical machine is determined by particular measurements. Conventionally, a calliper is used to measure the air gap size. However, the accuracy and/or repeatability of the measurements using a calliper is insufficient. Furthermore, this type of measurement is only capable of measuring some points of the air gap size and does not enable to perform a 360° scan of the air gap size.

Thus, there may be a need to a method and an electrical machine wherein measuring the size of the air gap is improved and reliability and/or accuracy is also improved. Further, there may be required a method and a corresponding electrical machine wherein the air gap can be measured at plural points between the rotor and the stator in a more reliable and accurate manner.

Summary of the Invention

The need may be satisfied by the subject-matter of the independent claims which are directed to a method of measuring the size of the air gap and which are directed to an electrical machine which may be equipped for measuring the size of the air gap between the rotor surface and the stator surface. Advantageous embodiments of the present invention are described by the dependent claims.

According to an embodiment of the present invention it is provided a method of measuring a size of an air gap between a rotor surface and a stator surface of an (e.g. at least partially assembled) electrical machine, in particular permanent magnet machine, the method comprising: performing a measurement based on electromagnetic radiation, in particular using at least one measurement probe installed at the stator and/or the rotor, to obtain air gap size related information; determining the size of the air gap based on the air gap size related information.

According to an embodiment of the present invention performing the measurement comprises: performing an optical measurement, in particular applying chromatic confocal sensing, in particular using at least chromatic confocal probe to obtain air gap size related information; determining the size of the air gap based on the air gap size related information.

According to another embodiment, performing the measurement comprises alternatively or additionally to performing an optical measurement, to perform a radar measurement, in particular using a waveguide.

The waveguide may be considered as an example of a measurement probe according to embodiments of the present invention. In other embodiments, the chromatic confocal probe may be considered as an example of a measurement probe according to embodiments of the present invention.

The method may entirely or partly be performed by at least one chromatic confocal probe and/or waveguide and a measurement controller and/or light and/or microwave generation and/or processing portion.

The measurement controller may for example comprise a light source for generating substantially white light, one or more fibre portions for guiding the generated light, a spectrometer for spectroscopically separating light returned from a chromatic confocal probe and a detector for detecting the intensity of different wavelengths of the spectroscopically separated light which has returned from the chromatic confocal probe.

The chromatic confocal probe(s) may have substantially cylinder symmetry.

The chromatic confocal sensing may involve to direct substantially white light to one or both of the rotor surface and the stator surface using at least one chromatic confocal probe which is mounted at the rotor and/or the stator. The chromatic confocal probe (for example a first and/or a second chromatic confocal probe) may comprise an optics which may focus or converge substantially white light which has been supplied to the chromatic confocal probe in order to direct converging light to the rotor surface and/or the stator surface. The chromatic confocal sensing may further involve reflection of the converging light at the rotor surface and/or the stator surface and may involve traversing the reflected light through the optics of the (same) at least one chromatic confocal probe. The chromatic confocal sensing may further involve to guide the reflected light having traversed the chromatic confocal probe to a spectrometer which is configured to spectroscopically separate the reflected light in dependence of the respective wavelengths. Furthermore, the chromatic confocal sensing may involve to detect the intensity of the spectroscopically reflected light using a detector, for example a line detector. Depending on the detected intensities of the separated reflected light for different wavelengths, the distance between the respective chromatic confocal probe (or a reference plane thereof) to the rotor surfaces and/or the stator surface may be derivable.

According to an embodiment of the present invention, performing the measurement comprises performing a radar measurement, in particular comprising emitting at least one microwave via a waveguide installed at the stator and/or the rotor and analyzing radiation reflected from the rotor and/or the stator, to obtain the air gap size related information.

The radar measurement may employ a so-called FMCW-method (Frequency Modulated Continuous Wave) for determining the distance, or e.g. CW radar and/or Doppler radar. The radar method applied may for example be similar to the one disclosed in WO 2016/204641 A1.

A first waveguide may for example be installed at the stator and/or a second waveguide may be installed at the rotor. Each waveguide may be configured and arranged to emit microwave radiation from the stator and/or the rotor to the rotor and/or stator. The emitted microwave may be reflected at the rotor and/or the stator and may be received by the waveguide which previously emitted the microwave. Performing the radar measurement may further comprise to analyze the reflected microwave, in order to determine air gap size related information or in particular also in order to determine the air gap size.

According to an embodiment of the present invention, an emission signal which frequency is changing continuously across the time, is emitted and is reflected either from the stator surface or the rotor surface. The emitted signal may for example radiation which has increasing frequency which increases linearly with the time. The reflected signal is received at a receiver having a particular travelling time difference. The frequency difference between the emitted radar signal and the received radar signal may be proportional to the distance or the air gap size.

The length of the waveguide may appropriately be selected or chosen, in order to define a particular travelling time and also to define a measurement accuracy and/or a measuring range of the air gap size.

The air gap size related information may be information which may enable to derive or determine the air gap size or at least a distance between a reference plane or line and one of the rotor surface and the stator surface. In order to obtain the air gap size based on the air gap size related information, furthermore, a calibration may be required. The calibration may be required to determine a zero point offset being for example a distance between reference planes associated with a first and a second chromatic confocal probe. Determining the size of the air gap based on the air gap size related information may thereby utilize the air gap size related information and at least calibration data. Furthermore, the configuration of a first and/or second chromatic confocal probe with regard to their optical properties such as refractive power and the for example wavelength distribution of the generated substantially white light may be utilized.

The determination of the size of the air gap may for example also comprise peak detection of a spectrogram in order to determine the wavelength for which the reflected light intensity has a maximum. Thereby, embodiments of the present invention provide an optical measurement. The method may be performed substantially without human interaction. The measurement may be performed on different heights (axial positions) of an electrical machine. A complete 360° view with for example over 100,000 single measurements may be performed by simply rotating the rotor of the electrical machine. The accuracy may be much higher than the accuracy of a measurement using a calliper. Further, repeatability may be improved.

The method may not require to stick any measurement device into the air gap which conventionally may cause problems, especially when the air gap becomes smaller along the circumferential direction.

Any measurement probe installed may not fill or protrude into the gap, thereby prohibiting any collision.

The measurement principle of the chromatic confocal sensing may be based on disperse optics. Thereby, a light source (for example comprised in or part of the measurement controller) may radiate white light through an axial chromatic dispersion optic (being comprised in the chromatic confocal probe). The dispersion optic converges the white light into a spectrum of different wavelengths. Thereby, the white light is encoded into its chromatic components and creates different focal points on the optical axis for each wavelength. For example, the blue light wavelengths of the white light are focused closer to the optic lens than the red wavelengths. The different wavelengths define a color field which represents the measuring range of the sensor or probe. When a surface, such as the rotor surface or the stator surface, is located in the color field, only a small amount of different wavelengths are focused on its surface. The rotor surface or the stator surface reflects the light which is then re-composed by the same optical system of the chromatic confocal probe.

A fibre coupler or a semi-transparent mirror may split the reflected light from the illumination beam or illumination light which may then pass through a for example filtering pinhole aperture into a spectrometer. This aperture may limit the transmitted light beam to the portion that is at the focal point on the rotor surface or the stator surface. The specific wavelength of the beam is calculated to determine the position of the rotor surface or the stator surface in the measurement field thereby representing the air gap size related information. The chromatic confocal sensing may provide high resolution distances which may also be laterally resolved due to a small measuring spot of only for example a few micrometres in size. The method may involve to reflect the substantially white light which is converged on different surface types which may typically be present as a rotor surface or a stator surface.

The electrical machine may at least partially be assembled in the sense that the rotor and the stator are mounted relative to each other such that the rotor is rotatably supported relative to the stator in a fixed configuration.

According to an embodiment of the present invention, applying chromatic confocal sensing comprises using a first chromatic confocal probe which is installed at the rotor or the stator, in particular in or at an air duct and/or opening and/or hole; wherein obtaining the air gap size related information comprises to obtain first air gap size data from the first chromatic confocal probe.

The first chromatic confocal probe (and also a potential or an optional second chromatic confocal probe) may reversibly or irreversibly be installed at the rotor or the stator. For example, one or more conventionally present openings or air ducts may be used to harbour or receive the respective chromatic confocal probe. The first chromatic confocal probe may allow to determine air gap size related information when the converged white light is reflected from one surface of the rotor surface and the stator surface. Employing a first chromatic confocal probe may be sufficient to determine the air gap size without necessarily requiring also a second chromatic confocal probe.

According to an embodiment of the present invention, applying chromatic confocal sensing comprises using a second chromatic confocal probe which is installed at the rotor or the stator; wherein obtaining the air gap size related information comprises to obtain second air gap size data from the second chromatic confocal probe.

The second chromatic confocal probe (configured similar or same as the first probe) may be utilized to shine or direct substantially white converged light to the other one of the surfaces of the rotor surface and the stator surface, in order to obtain supplemental air gap size related information. The second air gap size related information and the first air gap size data may be combined to determine the air gap size. Thereby, the reliability of the air gap size determination may be improved and also the accuracy may be improved.

According to an embodiment of the present invention, if the first chromatic confocal probe is installed at the rotor, the second chromatic confocal probe is installed at the stator, wherein if the first chromatic confocal probe is installed at the stator, the second chromatic confocal probe is installed at the rotor.

Thus, the air gap size may be determined by obtaining air gap size related information from a chromatic confocal probe installed at the stator and from another chromatic confocal probe installed at the rotor. For normally operating the electrical machine, the chromatic confocal probe(s) may either be removed or may not be removed.

According to an embodiment of the present invention, the first and the second chromatic confocal probe are installed at a substantially same axial position.

The axial direction of the electrical machine may be parallel or substantially coincident with the rotation axis of the rotor. When the first and second chromatic confocal probes are installed substantially at a same axial position, the air gap size in this same axial position may be determined in an accurate and reliable manner.

According to an embodiment of the present invention, the method comprises applying, in particular using the first chromatic confocal probe and the second chromatic confocal probe, chromatic confocal sensing for plural relative circumferential positions of the rotor relative to the stator in order to obtain air gap size related information for the plural relative circumferential positions.

Thereby, the air gap size may be measured at different or plural relative circumferential positions of the rotor relative to the stator, in particular around a whole circumferential revolution. For example, for between 10 and 1000 circumferential positions, the respective air gap size may be measured and determined. Thereby, information regarding the shape of the air gap across the circumferential direction may be obtained. Thereby, constructional characterisation of the air gap may be obtained in an improved manner.

According to an embodiment of the present invention, the rotor is rotated, in particular including a full rotation, in a stepwise or continuous manner in order to obtain the air gap size related information for the plural relative circumferential positions.

The rotor may be rotated to a first circumferential position relative to the stator and a first measurement by the first and/or the second chromatic confocal probe may be performed. Then, the rotor may be rotated to a second circumferential position relative to the stator and one or more further second measurements may be performed. This procedure may be continued, until the rotor has been rotated to a full revolution. During the measurements, the rotor may not move and may be in a fixed position relative to the stator. In other embodiments, the rotor may be moved also during the measurement. Thereby, geometrically characterisation of the air gap may be obtained in a simple and reliable manner.

According to an embodiment of the present invention, for any of the plural relative circumferential positions the first sensor outputs first air gap size data "a" and the second sensor outputs second air gap size data "b", wherein the air gap size is calculated according to the following equation: [air gap size] = $a + b$ - [zero point offset], wherein the zero point offset is the difference of the distances of the sensor zero points to the rotation axis of the rotor or to a reference line, the method in particular further comprising: determining the zero point offset by performing at least one calibration measurement.

The method may allow to measure the respective air gap size between different surface types of the rotor and the stator, for example painted stator segments or metallic surfaces of the magnets in the rotor. The rotor surface may comprise or be a surface of a permanent magnet module, in particular a covering surface covering a permanent magnet. The stator surface may be a surface of a stator yoke comprising lamellas or layers of magnetically highly permeable material. The stator surface may include also surfaces of plural teeth around which stator windings are wound.

The (surface of) rotor house and permanent magnets on the outside ring may be measured. A (surface of a) painted stator (e.g. comprising one or more or 10 or more stator segments) consisting of e.g. soft iron laminate and copper and air ducts for colling on the inside may also be measured.

The chromatic confocal probe(s) may have for example a diameter between 3 mm and 10 mm, for example between 4 mm and 8 mm. The chromatic confocal probes may allow to pass the generated white light through a tiny pinhole having a diameter of a few micrometres into the dispersive optics where the light is axially split into a continuum of wavelengths (collar encoding). The dispersive optics may comprise one or more lenses of doped glasses. In a calibration step, a distance is assigned to each measurable wavelength of the light which has been wavelength separated by the spectrometer.

Using the quantities "a" and "b" allows to accurately determine the air gap size using two chromatic confocal probes. In other embodiments, even a higher number of chromatic confocal probes may be utilized for the measurements and those may be mounted at for example different axial positions of the electrical machine.

According to an embodiment of the present invention, the method further comprises determining a shape, in particular for at least the axial position, of the air gap based on the air gap size related information for the plural relative circumferential positions.

In particular, the minimum width of the air gap and/or the so-called static and/or dynamic eccentricity may be determined from the measurement data. Thereby, conventionally quantities to characterise the geometry of the air gap may be derived using or employing the method.

According to an embodiment of the present invention, the method comprises applying chromatic confocal sensing to obtain further air gap size related information by one of: using a further first chromatic confocal probe and/or using a further second chromatic confocal probe, being each arranged at the stator and the rotor, respectively, at a further axial position different from the axial position and applying chromatic confocal sensing to obtain further air gap size related information; moving the first chromatic confocal probe and/or the second chromatic confocal probe to a further axial position different from the axial position and applying chromatic confocal sensing to obtain further air gap size related information.

Thereby, the air gap size in particular across the entire circumferential revolution may be derived or obtained for different axial positions for still further thorough characterisation of the air gap geometry.

According to an embodiment of the present invention, the method further comprises at least one of: determining a minimum air gap size based on the air gap size related information; determining a (static and dynamic) eccentricity based on the air gap size related information. Thereby, conventionally required or desired geometrical characterisation is enabled.

According to an embodiment of the present invention, at least one of the following holds: the rotor surface comprises a metallic surface, in particular surface of a magnet module; the stator surface comprises a yoke surface, in particular painted surface; an absolute accuracy of air gap size measurement is e.g. between 0.2 mm and 0.05 mm or between 0.1 mm and 0.05 mm.

Thereby, conventionally employed surfaces of the rotor and/or the stator may be supported and the accuracy may be improved compared to conventional methods.

According to an embodiment of the present invention, the applying chromatic confocal sensing comprises: emitting substantially white light through an axial chromatic dispersion optic, in particular of a chromatic confocal probe, towards the rotor surface or the stator surface; allowing the light reflected from the rotor surface or the stator surface to traverse the axial chromatic dispersion optic in a reversed manner; spectroscopically analysing the traversed reflected light; deriving the air gap size related information based on the spectroscopic analysis.

Thereby, conventional confocal sensing may be implemented using conventionally available components.

It should be understood, that features, individually or in any combination, provided, explained, described or employed for a method of measuring a size of an air gap between a rotor surface and a stator surface of an electrical machine may also, individually or in any combination, applied to or provided for an electrical machine according to embodiments of the present invention and vice versa.

According to an embodiment of the present invention it is provided an electrical machine, in particular permanent magnet machine, comprising: a rotor; a stator, at least one measurement probe mounted at the stator (103) or the rotor (102), the probe using electromagnetic radiation to obtain air gap size related information, the machine in particular comprising: a controller communicatively and/or fibre-optically and/or using a waveguide coupled to the measurement probe and configured to carry out or control a method according to any one of the preceding embodiments.

The measurement probe in particular comprising at least one of: a first chromatic confocal probe mounted at the stator or the rotor and arranged and configured to apply chromatic confocal sensing, at least one waveguide installed at the stator and/or the rotor, arranged and configured to emit a microwave towards the rotor and/or the stator.

The measurement probe (e.g. first chromatic confocal probe) may reversibly or irreversibly be mounted at the stator or the rotor. The measurement controller may in particular embodiments be part of the electrical machine. In other embodiments, the measurement controller may not be part of the electrical machine. The probe(s) may be demounted from the stator and/or rotor after measurement and/or before commissioning.

According to an embodiment of the present invention it is provided a wind turbine, comprising: plural rotor blades connected to a rotor shaft; an electrical machine according to the preceding claim configured as generator, the rotor shaft being connected to the rotor.

The electrical machine may comprise one or more optical fibre portions which fibre optically couples the first chromatic confocal probe with the measurement controller.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates a portion of an electrical machine according to an embodiment of the present invention;

Fig. 2 schematically illustrates a portion of another electrical machine according to an embodiment of the present invention;

Fig. 3 illustrates a spectrogram as acquired employing a method of measuring a size of an air gap between a rotor surface and a stator surface according to an embodiment of the present invention;

Fig. 4 illustrates a portion of an electrical machine according to still another embodiment of the present invention for illustration of measurement steps; and

Fig. 5 schematically illustrates a portion of another electrical machine according to an embodiment of the present invention.

Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

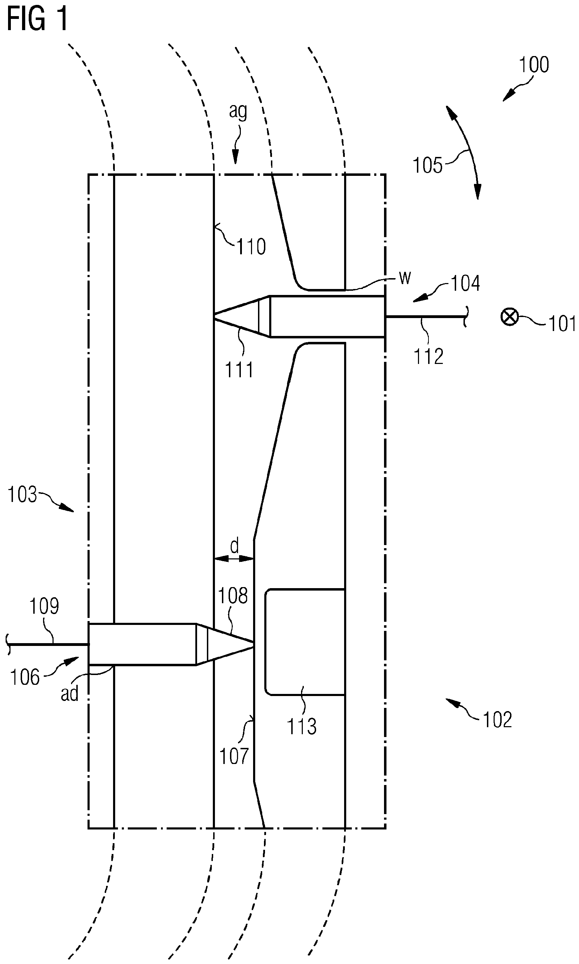

The portion of the electrical machine 100 illustrated in **Fig. 1** in a schematic manner as viewed along an axial direction 101 in a cross-section comprises a rotor 102 and a stator 103, wherein the rotor 102 is rotatably supported relative to the stator 103 and air gap 'ag' is between rotor and stator. The cross-sectional view illustrated in Fig. 1 is thus a cross-section at a particular axial position of the electrical machine 100. The rotor 102 is rotatably supported relative to the stator 103 and an air gap 'ag' having an air gap size 'd' is formed between the rotor 102 and the stator 103. The electrical machine 100 further comprises a first chromatic confocal probe 104 (an example of a measurement probe) which is, in the illustrated embodiment, mounted at the rotor 102. In other embodiments, the probe 104 may be mounted at the stator 103. The arrow 105 denotes the circumferential direction. The first chromatic confocal probe 104 is mounted at the rotor 102 and is configured to apply chromatic confocal sensing as employed in a method of measuring a size of an air gap between a rotor surface and a stator surface according to an embodiment of the present invention.

The embodiment illustrated in Fig. 1 uses the first chromatic confocal probe 104 installed at the rotor 102 in order to perform chromatic confocal sensing. In the embodiment illustrated in Fig. 1, the electrical machine 100 further comprises a second chromatic confocal probe 106 which is mounted at the stator. The method of measuring the air gap size 'd' of air gap 'ag' further includes to employ the second chromatic confocal probe 106 and uses the respective measurement data.

As can be seen from the embodiment illustrated in Fig. 1, the first chromatic confocal probe is installed at the rotor and the second chromatic confocal probe is installed at the stator. The first or second chromatic confocal probes 104, 106 are installed at the rotor 102 or the stator 103, in particular in or at an air duct 'ad' and/or opening and/or hole 'h'.

As can further be appreciated from Fig. 1, the first chromatic confocal probe 104 and the second chromatic confocal probe 105 are installed at a substantially same axial position, as they lie in the cross-sectional plane illustrated in Fig. 1 being arranged at a particular axial position along the axial direction 101.

Fig. 1 illustrates the electrical machine 100 wherein the rotor and the stator 103 are at a particular relative circumferential position. According to an embodiment of the present invention, plural measurements are applied for plural relative circumferential positions of the rotor 102 relative to the stator, i.e. the rotor is then arranged or rotated to plural circumferential relative positions along the circumferential direction 105. In reality, the rotor as well as the stator 102, 103 are both having a curved shape which is indicated by the dashed lines, however, parts of them are illustrated in a straight manner for simplicity. For performing the measurements for plural circumferential positions, the rotor may either be continuously be rotated while measurements are taken or the rotor may be rotated in a stepwise manner and measurements may be performed while the rotor is in a fixed relative circumferential position relative to the stator.

Using the air gap size related information for the plural relative circumferential positions may allow to determine a shape of the air gap.

According to an embodiment of the present invention, the method to determine the air gap may involve to measure air gap size related information or in particular air gap size at at least one further axial position being different from the axial position illustrated in Fig. 1. For the plural measurements at plural axial positions, also two chromatic confocal probes may be installed at the further axial position either permanently or reversibly mounted. Thereby, either the chromatic confocal probes 104, 106 may be removed from the first axial position and moved and installed at the second axial position or still a further first and a further second chromatic confocal probe may be installed at the further axial position. Thereby, for example air gap sizes for different axial positions across the entire circumferential revolution may be obtained, air gap shape information may be obtained, air gap eccentricity and in particular air gap minimal size may be determined.

The rotor surface 107 is irradiated with substantially white converging light 108 by light which traverses the second chromatic confocal probe 106. The substantially white light is supplied to the second chromatic confocal probe by an optical fibre 109 into which substantially white light is injected by a not illustrated light source. The stator surface 110 of the electrical machine 100 is irradiated with substantially white converging light 111 which has been traversed through the first chromatic confocal probe 104. Therefore, the first chromatic confocal probe 104 is supplied with substantially white light using a fibre 112 into which substantially white light is injected by a light source, for example comprised in a measurement controller as will be explained below.

The rotor surface 107 comprises a metallic surface, in particular a surface of a magnet module which for example covers a permanent magnet 113. The stator surface 110 comprises a yoke surface, in particular a painted surface.

According to an embodiment of the present invention it is provided a wind turbine which comprises plural rotor blades connected to a rotor shaft and an electrical machine, such as electrical machine 100 which is configured as a generator of the rotor shaft being connected to the rotor, for example rotor 102.

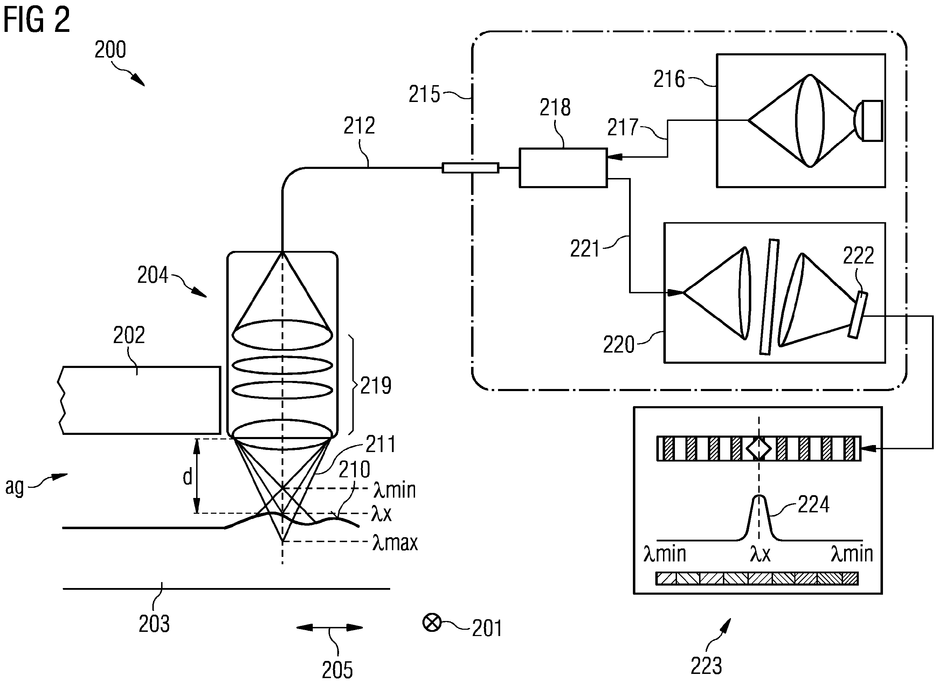

The electrical machine 200 partly shown in **Fig. 2** in a schematic manner also, similarly as the machine 100 illustrated in Fig. 1, comprises a rotor 202 and a stator 203. Further, the electrical machine 200 comprises a first chromatic confocal probe 204 which is mounted at the stator 202. By the optical fibre 212, the first chromatic confocal probe 204 is fibre-optically coupled to a measurement controller 215. The measurement controller 215 comprises a light source 216 which is configured to generate substantially white light and to inject the white light into an optical fibre 217. The white light is supplied by the fibre 217 to a fibre coupler 218 which transmits the white light into the fibre 212 leading to the first chromatic confocal probe 204.

The probe 204 comprises an axial chromatic dispersion optic 219 which converges the substantially white light into the converging light beam 211 which comprises several wavelengths from a wavelength $\lambda\_min$ to $\lambda\_max$. Light of different wavelengths is converged to a focal point at different distances downstream the chromatic dispersion optic 219 and thus also downstream the confocal probe 204. The converging white light 211 is impacting onto the stator surface 210 and is reflected therefrom. Depending on the position of the surface 210 and thus depending on the distance of the surface from the confocal probe 204, only light having a particular wavelength is reflected at the respective focal point and is therefore reflected to a substantial amount back into the chromatic dispersion optic 219, traverses optic 219 and returns into the fibre 212. The reflected light is guided into the fibre coupler 218 and split and guided to a spectrometer 220 using another fibre portion 221.

In the spectrometer 220 the reflected light is spectroscopically separated into different wavelength components and is analysed by detecting the respective intensities by a light detector or line detector 222. The spectroscopically separating may be performed in different manners, for example involving dispersion optics or for example a diffraction grating.

The insert 223 illustrates a spectrogram 224 of the spectroscopically separated reflected light. The profile 224 depicts the respective detected light intensity in dependence of the wavelength of the reflected light. The profile 224 comprises a maximum at a particular wavelength $\lambda\_x$. From this wavelength $\lambda\_x$, the respective distance d of the confocal probe 204 to the stator surface 210 may be derived, in particular further using calibration data.

The electrical machines 100 and/or 200 illustrated in Figs. 1 and 2 may be capable of performing a method of measuring a size d of the air gap in a rotor surface and a stator surface. Thereby, the method may apply chromatic confocal sensing to obtain air gap size related information. The size of the air gap d may be then determined based on the air gap related information.

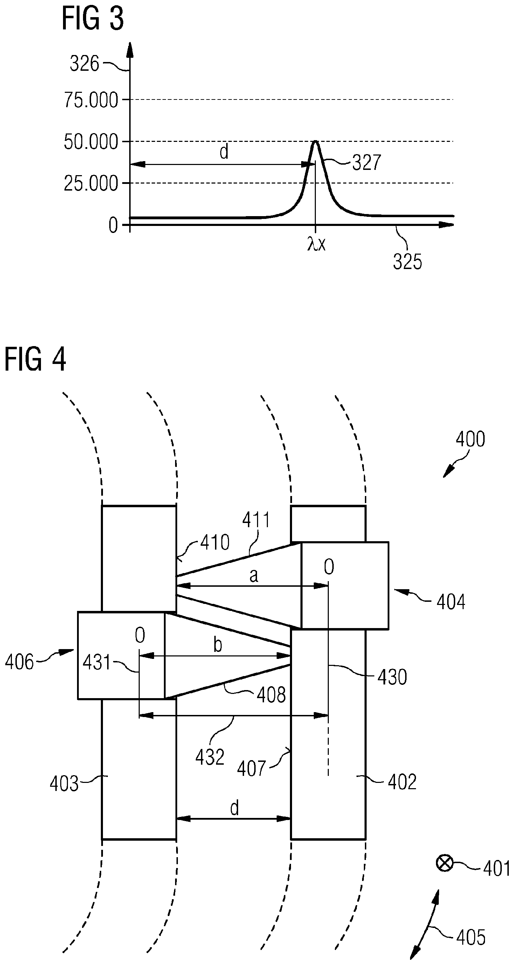

Fig. 3 illustrates a spectrogram in a coordinate system having as an abscissa 325 indicating the wavelength (or directly distance of air gap size d) and having as an ordinate 326 the intensity of the reflected light. The profile 327 comprises a maximum at a particular wavelength $\lambda\_x$. From the wavelength $\lambda\_x$, the respective measured distance, i.e. the air gap size, may be determined. In other embodiments, a previously performed calibration may enable to directly transform the wavelength of the detected light to a particular measured distance, i.e. air gap size.

Measurements may be performed with a sampling frequency of 1.0 kHz, for example. Measurement time may be between 50 $\mu$s and 100 $\mu$s, for example.

Fig. 4 schematically illustrates a further embodiment 400 of an electrical machine according to an embodiment of the present invention. The first chromatic confocal probe 404 measures a size "a" as the air gap size related information relative to a respective reference plane 430. The second chromatic confocal probe 406 measures a quantity "b" as the air gap size related information as the distance between a second reference plane 431 and the rotor surface 407. The first chromatic confocal probe 404 measures the quantity "a" as the distance between the first reference plane 430 and the stator surface 410. The distance between the first reference plane 430 and the second reference plane 431 is denoted with reference sign 432 and synonymously designated as "zero point offset". The air gap d may then be determined by the following equation [air gap size] = a + b - [zero point offset].

According to an embodiment of the present invention, an electrical machine may comprise four measurement probes, in particular chromatic confocal probes, installed at two different axial positions or may comprise even a higher number of probes installed at more than two different axial positions. The measurement probes may be installed at cooling channels or cooling ducts or for example any holes which are present in the stator or the rotor.

In the Figs. 1, 2 and 4, the respective chromatic confocal probes 104, 106, 204, 404, 406 may be considered as examples of measurement probes according to embodiments of the present invention.

According to embodiments of the present invention, the measurement probe may be configured as a chromatic confocal probe or as a waveguide which is configured and designed to conduct a microwave and emit a microwave as well as to receive a reflected microwave.

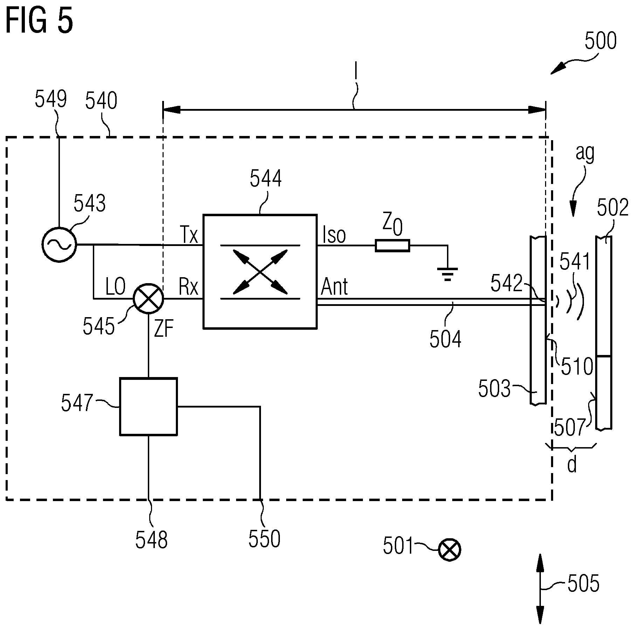

The portion of the electrical machine 500 schematically illustrated in **Fig. 5** along an axial direction 501 in a cross-section comprises a rotor 502 and a stator 503. An air gap "ag" having an air gap size "d" is formed between the rotor 502 and the stator 503.

The electrical machine 500 further comprises a waveguide 504 (being an example of a measurement probe) which is mounted at the stator 503. In other embodiments, the waveguide 504 may be mounted at the rotor 502. The waveguide 504 is configured to emit a microwave 541 from the opening or aperture of the waveguide 504 (the opening being labelled with reference sign 542) towards the rotor surface 507.

In Fig. 5, also a radar measurement system 540 is illustrated, which may be used for the measurements and may be comprised in the electrical machine 500. In other embodiments, the radar measurement system 540 (except the waveguide 504) may not be part of the electrical machine 500.

An oscillator 543 generates the FMCW emission signal and is coupled via the input TX to a coupler 544. The coupler 544 separates an emission and a reception signal from each other. Therefore, the input TX is isolated from the output RX. The terminal "Iso" of the coupler is sealed with its wave resistance Z0. The output RX of the coupler 544 is coupled or connected with the input RX of the high frequency mixer 545. The output Ant of the coupler 544 is connected with the waveguide 504 which may also be configured as an antenna line.

The end or opening 542 of the waveguide 504 is configured in order to emit at least a portion of the emission signal 541, to reflect a portion and also absorb a portion. The emitted portion 541 of the emission signal emanates or is impacting at the rotor surface 507, is reflected and is received at the opening or waveguide end 542. The returned received signal is guided via the waveguide 504, via the coupler 544 and is supplied to the high frequency mixer 545 at the input labelled with Rx. The high frequency mixer 545 is at the input LO connected with the emission signal of the oscillator 543. The output ZF of the high frequency mixer 545 is connected with the signal processing unit 547. The signal processing unit 547 amplifies the analogue ZF signal at the output of the high frequency mixer 545 and filters (optionally) the analogue and amplified ZF signal for example with an integrated (adjustable) bandpass filter. Thereby, only frequency components of the ZF signal are digitized which emanate from the partial reflection at the opening or end 542 of the waveguide 504 and which emanate from the reflecting surface 507 at the distance d. The digitized signals may via a data output terminal 548 be supplied to a calculation unit which may control the oscillator via a control line 549 and which may also control the controllable signal processing unit 547 via the control input 550.

According to other embodiments, other radar measurement methods may be utilized instead of a FMCW method.

The processing unit 547 may comprise an analogue-digital converter. The waveguide 504 may be configured as a substantially cuboid waveguide which may be filled with (e.g. solid) dielectric material e.g. different from air. The outer extension may for example be in the range of 3 times 5 mm$^2$ to 5 times 10 mm$^2$. The length of the waveguide 504 may for example be between 5 cm and 10 cm. The waveguide 504 may comprise a coax cable terminal configured for a microwave between 20 and 30 GHz. The radar frequency may be between 20 GHz and 30 GHz. The system may be calibrated before using it for air gap size measurements.

The method of measuring the air gap size may be applied for evaluation of an at least partially assembled electrical machine. The air gap size data may be utilized in order to improve the manufacturing or assembly method. The method may be applied to measure the respective air gap sizes of a generator, in particular a generator of a wind turbine, for example an onshore wind turbine or offshore wind turbine.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of measuring a size (d) of an air gap(ag) between a rotor surface (107) and a stator surface (110) of an electrical machine (100), in particular permanent magnet machine, the method comprising:

    performing a measurement based on electromagnetic radiation, in particular using at least one measurement probe installed at the stator and/or the rotor, to obtain air gap size related information;
    determining the size (d) of the air gap (ag) based on the air gap size related information.

2. Method according to the preceding claim, wherein performing the measurement comprises:
    performing an optical measurement, in particular applying chromatic confocal sensing, to obtain air gap size related information.

3. Method according to the preceding claim, wherein applying chromatic confocal sensing comprises using a first chromatic confocal probe (104) which is installed at the rotor (102) or the stator (103), in particular in or at an air duct (ad) and/or opening and/or hole (h);
    wherein obtaining the air gap size related information comprises to obtain first air gap size data from the first chromatic confocal probe.

4. Method according to any one of the preceding claims 2 or 3, wherein applying chromatic confocal sensing comprises using a second chromatic confocal probe (106) which is installed at the rotor (102) or the stator (103);

    wherein obtaining the air gap size related information comprises to obtain second air gap size data from the second chromatic confocal probe,
    wherein in particular the following applies:

    if the first chromatic confocal probe (104) is installed at the rotor (102), the second chromatic confocal probe (106) is installed at the stator (103),
    if the first chromatic confocal probe (104) is installed at the stator (103), the second chromatic confocal probe (106) is installed at the rotor (102).

5. Method according to the preceding claim, wherein the first and the second chromatic confocal probe (104, 106) are installed at a substantially same axial position.

6. Method according to any one of the preceding claims, comprising applying, in particular using the first chromatic confocal probe (104) and the second chromatic confocal probe (106), chromatic confocal sensing or RADAR for plural relative circumferential positions of the rotor relative to the stator in order to obtain air gap size related information for the plural relative circumferential positions.

7. Method according to the preceding claim, wherein the rotor (102) is rotated, in particular including a full rotation, in a stepwise or continuous manner in order to obtain the air gap size related information for the plural relative circumferential positions.

8. Method according to any one of the preceding claims 6 or 7 when referred to claim 2, wherein for any of the plural relative circumferential positions the first confocal probe (104) outputs first air gap size data "a" and the second confocal probe (106) outputs second air gap size data "b", wherein the air gap size is calculated according to the following equation:

$$\texttt{[air gap size]} = a + b - \texttt{[zero point offset]}$$

wherein the zero point offset (432) is the difference of the distances of the sensor zero points to the rotation axis of the rotor or to a reference line (430, 431),
the method in particular further comprising:
determining the zero point offset by performing at least one calibration measurement.

9. Method according to any one of the preceding claims 6 to 8, further comprising at least one of:

determining a shape, in particular for at least the axial position, of the air gap (ag) based on the air gap size related information for the plural relative circumferential positions;
determining a minimum air gap size based on the air gap size related information;
determining a static and/or dynamic eccentricity based on the air gap size related information.

10. Method according to any one of the preceding claims when referred to claim 2, the method comprising:
applying chromatic confocal sensing to obtain further air gap size related information by one of:

using a further first chromatic confocal probe and/or using a further second chromatic confocal probe, being each arranged at the stator (103) and the rotor (102), respectively, at a further axial position different from the axial position and applying chromatic confocal sensing to obtain further air gap size related information;
moving the first chromatic confocal probe (104) and/or the second chromatic confocal probe (106) to a further axial position different from the axial position and applying chromatic confocal sensing to obtain further air gap size related information.

11. Method according to any one of the preceding claims when referred to claim 2, wherein the applying chromatic confocal sensing comprises:

emitting substantially white light through an axial chromatic dispersion optic (219), in particular of a chromatic confocal probe, towards the rotor surface (107) or the stator surface (110);
allowing the light reflected from the rotor surface or the stator surface to traverse the axial chromatic dispersion optic (219) in a reversed manner;
spectroscopically analysing the traversed reflected light;
deriving the air gap size related information based on the spectroscopic analysis.

12. Method according to any one of the preceding claims, wherein performing the measurement comprises:
performing a RADAR measurement, in particular comprising emitting at least one microwave via a waveguide installed at the stator and/or the rotor and analysing radiation reflected from the rotor and/or the stator, to obtain the air gap size related information.

13. Method according to any one of the preceding claims, wherein at least one of the following holds:

the rotor surface (107) comprises a metallic surface, in particular surface of a magnet module (113);
the stator surface (110) comprises a yoke surface, in particular painted surface;
an absolute accuracy of air gap size measurement is between 0.1 mm and 0.05 mm.

14. Electrical machine (100,200,400), in particular permanent magnet machine, comprising:

a rotor (102);
a stator (103);
at least one measurement probe mounted at the stator (103) or the rotor (102), the probe using electromagnetic radiation to obtain air gap size related information;
the machine in particular comprising:
a controller (215) communicatively and/or fibre-optically and/or using a wave guide coupled to the measurement probe (204) and configured to carry out or control a method according to any one of the preceding claims, the measurement probe in particular comprising at least one of:

at least one first chromatic confocal probe (104, 204) mounted at the stator (103) or the rotor (102) and arranged and configured to apply chromatic confocal sensing;
at least one waveguide installed at the stator and/or the rotor, arranged and configured to emit a microwave towards the rotor and/or the stator.

15. Wind turbine, comprising:

plural rotor blades connected to a rotor shaft;
an electrical machine (100,200,400) according to the preceding claim configured as a generator, the rotor shaft being connected to the rotor.

# FIG 1

FIG 2

# FIG 3

# FIG 4

# FIG 5

Europäisches
Patentamt

European
Patent Office

Office européen
des brevets

# EUROPEAN SEARCH REPORT

**Application Number**

EP 23 16 4908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 960 444 B1 (SIEMENS AG [DE]) 2 December 2020 (2020-12-02) | 1-7, 9-11,13 | INV. G01B11/14 |
| A | * the whole document * | 8 | |
| | ----- | | ADD. |
| X | US 7 688 081 B2 (ROLLS ROYCE PLC [GB]) 30 March 2010 (2010-03-30) | 1,2,6,7, 9,12-15 | G01B15/00 |
| A | * the whole document * | 3-5,8, 10,11 | |
| X | CN 108 680 114 A (UNIV TIANJIN) 19 October 2018 (2018-10-19) | 1-7, 9-11,13, 14 | |
| A | * the whole document * | 8 | |
| X | DE 10 2016 122862 A1 (WOBBEN PROPERTIES GMBH [DE]) 30 May 2018 (2018-05-30) | 1,2, 13-15 | |
| A | * the whole document * | 8 | |
| X | CN 106 705 873 A (BEIJING GOLDWIND SCIENCE & CREATION WINDPOWER EQUIPMENT CO LTD) 24 May 2017 (2017-05-24) | 1,2, 13-15 | |
| | | | TECHNICAL FIELDS SEARCHED (IPC) |
| A | * the whole document * | 8 | G01B |
| X | US 2015/090017 A1 (SILIETI MAHMOOD K [US] ET AL) 2 April 2015 (2015-04-02) | 1,2,13, 14 | |
| A | * the whole document * | 8 | |

The present search report has been drawn up for all claims

| Place of search | Date of completion of the search | Examiner |
|---|---|---|
| Munich | 31 August 2023 | Ardelt, Per-Lennart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 4908

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2023

| Patent document cited in search report | | Publication date | Patent family member(s) | | Publication date |
|---|---|---|---|---|---|
| EP 2960444 | B1 | 02-12-2020 | DE 102014212412 A1 | | 31-12-2015 |
| | | | EP 2960444 A1 | | 30-12-2015 |
| | | | KR 20160001664 A | | 06-01-2016 |
| | | | RU 2015124042 A | | 10-01-2017 |
| | | | US 2015377610 A1 | | 31-12-2015 |
| US 7688081 | B2 | 30-03-2010 | GB 2455968 A | | 01-07-2009 |
| | | | GB 2466404 A | | 23-06-2010 |
| | | | US 2009128166 A1 | | 21-05-2009 |
| CN 108680114 | A | 19-10-2018 | NONE | | |
| DE 102016122862 A1 | | 30-05-2018 | BR 112019010023 A2 | | 20-08-2019 |
| | | | CA 3042452 A1 | | 31-05-2018 |
| | | | CN 110023714 A | | 16-07-2019 |
| | | | DE 102016122862 A1 | | 30-05-2018 |
| | | | EP 3545261 A1 | | 02-10-2019 |
| | | | JP 2020513541 A | | 14-05-2020 |
| | | | KR 20190087554 A | | 24-07-2019 |
| | | | US 2021080294 A1 | | 18-03-2021 |
| | | | WO 2018096134 A1 | | 31-05-2018 |
| CN 106705873 | A | 24-05-2017 | NONE | | |
| US 2015090017 | A1 | 02-04-2015 | US 2015090017 A1 | | 02-04-2015 |
| | | | WO 2015050657 A1 | | 09-04-2015 |

EPO FORM P0459

For more details about this annex : see Official Journal of the European Patent Office, No. 12/82

**EP 4 439 006 A1**

**Patent documents cited in the description**

- WO 2016204641 A1